Europäisches Patentamt

European Patent Office

Office européen des brevets

(19)

(11) Publication number: **0 002 935**
**B1**

(12) **EUROPEAN PATENT SPECIFICATION**

(45) Date of publication of patent specification: **16.11.83**

(21) Application number: **78300876.6**

(22) Date of filing: **20.12.78**

(51) Int. Cl.³: **F 16 K 31/36,**
**F 16 L 55/04, F 16 K 17/02,**
**F 16 K 17/04**

(54) **Differential pressure relief valve.**

(30) Priority: **04.01.78 CA 294284**

(43) Date of publication of application:
**11.07.79 Bulletin 79/14**

(45) Publication of the grant of the patent:
**16.11.83 Bulletin 83/46**

(84) Designated Contracting States:
**BE CH DE FR GB IT NL SE**

(56) References cited:
**DE - A - 1 750 130**
**DE - B - 2 313 590**
**DE - C - 958 975**

(73) Proprietor: **Honeywell-Braukmann GmbH**
**Hardhofweg**
**D-6950 Mosbach (DE)**

(72) Inventor: **Braukmann, Heinz, Werner**
**5601 Steeles Avenue West**
**Weston, Ontario (CA)**

(74) Representative: **Rentzsch, Heinz et al,**
**Honeywell Europe S.A. Holding KG**
**Kaiserleistrasse 55 Postfach 184**
**D-6050 Offenbach am Main (DE)**

Courier Press, Leamington Spa, England.

# Differential Pressure Relief Valve

The present invention relates to a differential pressure relief valve according to the preamble of claim 1.

Such a differential pressure relief valve is known from DE—C—958 975. This known valve comprises first and second chambers on opposite sides of a diaphragm connectible by connection pipes respectively to primary and secondary pressure zones in a conduit through which fluid can flow. The first chamber communicates by means of the first connection pipe with the primary pressure zone, and the second chamber communicates by means of the second connection pipe with the secondary pressure zone. A closing member acting together with a valve seat in the housing of the relief valve is slidably mounted in said housing and secured to the diaphragm. The closing member traverses the chambers and is sealed in the housing. This known differential pressure relief valve may only be connected by two separate pipe connections to the conduit and may not be flanged directly to the conduit.

From DE—A—1 750 130 a flame trap safety valve is known having a spring-loaded sleeve as a closing member with said member being actuated by an annular diaphragm separating the valve housing into two chambers.

Considering the differential pressure relief valve according to DE—C—958 975 it is, therefore, the object of the present invention to provide such a relief valve which can be connected directly with the primary and secondary pressure zones without extraneous tubing. This object is achieved by the characterizing features of claim 1. Further advantageous embodiments of the present invention may be taken from the subclaims.

One embodiment of the invention will now be described, by way of example, with reference to the accompanying drawings, in which:—

Figure 1 is a cross-sectional view of a differential pressure valve in the open position, and

Figure 2 is a similar view of the valve in the closed position.

Referring to the drawing, a fluid under pressure in a conduit 10 flows from left to right, with the pressure therefore dropping in the same direction. The conduit has the usual pair of apertures 12 and 14 to which tubing would be connected in known manner through adaptors to conventional differential pressure relief valves.

The valve according to this embodiment of the invention has an annular diaphragm 16 separating similarly shaped inner and outer half shells 18 and 20 respectively, which form a housing, thus providing a first chamber 22 and a second chamber 24. Each shell 18 and 20 is rimmed by a flange 26 and 28 respectively between which the peripheral edge of the annular diaphragm 16 is secured in position by bolts 30.

The inner shell 18 has a neck 32 which terminates in a flange 34 on which is positioned a sealing gasket 36. The flange 34 has threaded holes 35 for attachment to the conduit 10.

The neck 32, flange 34 and sealing gasket 36 are traversed by a centrally disposed channel 38 and an offset channel 40. The channel 40 leads into the first chamber 22 and the channels 38 and 40 communicate respectively with the apertures 14 and 12 in the conduit.

The outer shell 20 has a centrally placed channel 42 which is in line with the channel 38 of the inner shell 18. Spaced from and surrounding the channel 42 is an externally threaded spigot 44. A cap 46 with an opening to atmosphere at its outer end is threaded onto the spigot 44. The cap 46 has a cross arm 48 which supports an insert 50 carrying a resilient valve seat 52 held in place by a washer 54 and a screw 56.

Traversing the chambers 22 and 24 and slidably located in the channels 38 and 42 is a tubular sleeve assembly 57 formed of two parts 58 and 60. The inner part 58 has a seal 62 engaging the shell 18 and the outer part 60 has a seal 64 engaging the shell 20. Thus, chambers 22 and 24 are closed chambers. The outer end of part 58 and the inner end of part 60 are flanged and stepped at 66 and 68 respectively to engage an enlarged peripheral rib around the aperture in the annular diaphragm 16.

The outer sleeve part 60 has a series of holes 70 which communicate with the second chamber 20. The outer sleeve part 60 extends outwardly of the outer shell 22 to terminate in a flared end 72 engageable with the valve seat 52. The inner end of a spring 74 bears against a flange 68 on the tubular sleeve 57 and the outer end of the spring 74 bears against the inner face of the outer shell 20.

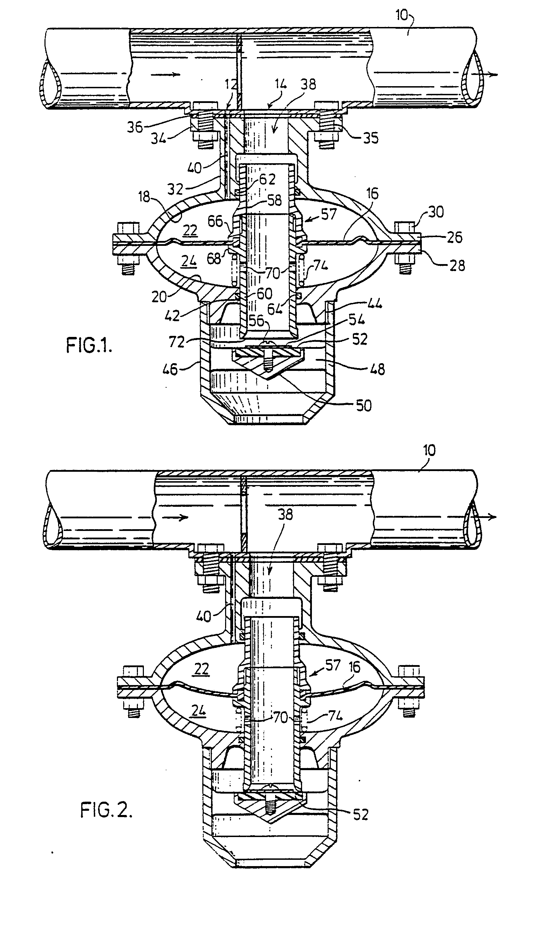

If the pressure in the primary zone in the conduit 10 exceeds the pressure in the secondary zone by a predetermined amount, the action of the primary pressure through the offset channel 40 on the diaphragm 16 forces the sleeve assembly 57 outwardly against the force of the spring 74 into sealing engagement with the seat 52 as shown in Figure 2. However, if the primary pressure exceeds the secondary pressure by less than the predetermined amount, then the secondary pressure acting on the diaphragm 16 through the channel 38 and the holes 70 of the sleeve assembly 57 causes the diaphragm 16 to move inwardly so that the sleeve 57 moves away from the seat 52 as shown in Figure 1 to permit fluid to escape past the valve seat 52 until the pressure differential rises to the predetermined amount, which is set by the spring 74.

Other embodiments of the invention will be readily apparent to a person skilled in the art, the scope of the invention being defined in the appended claims.

## Claims

1. Differential pressure relief valve having first and second chambers (22, 24) on opposite sides of a diaphragm (16), connectible respectively to primary and secondary pressure zones (12, 14) in a conduit (10) through which fluid can flow, the valve having further a housing (18, 20) with first and second channels (40, 38) connectible respectively to the primary and secondary pressure zones (12, 14) of the conduit (10), the first chamber (22) communicating with the first channel (40) and the second chamber (24) communicating with the second channel (38), a closing member (57) slidably mounted in the housing and secured to the diaphragm (16), the closing member (57) traversing the chambers (22, 24) and being sealed in the housing (18, 20), a valve seat (52) in the housing (20) radially outwardly — with respect to the conduit (10) — of the second chamber (24), characterized in that the closing member is a sleeve (57) having an aperture (70) therein communicating the bore of the sleeve (57) with the second chamber (24), the radially outer end of the sleeve (57) being engageable with the valve seat (52) and the radially inner end of the sleeve (57) communicating with the secondary pressure zone through the second channel (38) and in that said housing (18) has a portion (32) for attachment to the conduit (10), which portion is traversed by said first channel (38) and by said second channel (40) offset therefrom.

2. Relief valve according to claim 1, characterized in that the housing is formed by inner and outer half shells (18, 20) having flanges (26, 28) with the diaphragm (16) secured between the flanges (26, 28) to form the first and second chambers (22, 24).

3. Relief valve according to claim 2, characterized in that a spring (74) extends between a flange (68) on the sleeve (57) and the outer half shell (20) to set the differential pressure at the predetermined amount.

## Patentansprüche

1. Differentialdruck-Entlastungsventil mit einer ersten und einer zweiten Kammer (22, 24) auf den gegenüberliegenden Seiten einer Membran (16), die entsprechend mit ersten und zweiten Druckzonen (12, 14) in einer Leitung (10) verbindbar sind, durch die ein Fluid fließen kann, wobei das Ventil ferner ein Gehäuse (18, 20) mit ersten und zweiten Kanälen (40, 38) aufweist, die mit den ersten und zweiten Druckzonen (12, 14) der Leitung (10) verbunden sind, und wobei die erste Kammer (22) mit dem ersten Kanal (40) und die zweite Kammer (24) mit dem zweiten Kanal (38) in Verbindung steht, mit einem verschiebbar in dem Gehäuse gelagerten und an der Membran (16) befestigten Schließkörper (57), der die Kammern (22, 24) durchquert und in dem Gehäuse (18, 20) abgedichtet ist, und mit einem Ventilsitz (52) in dem Gehäuse (20), der in bezug auf die Leitung (10) radial außerhalb der zweiten Kammer (24) liegt, dadurch gekennzeichnet, daß der Schließkörper aus einer Hülse (57) besteht, die eine Öffnung (70) besitzt, welche die Bohrung der Hülse (57) mit der zweiten Kammer (24) verbindet, daß das radial äußere Ende der Hülse (57) mit dem Ventilsitz (52) in Eingriff bringbar ist, daß das radiale innere Ende der Hülse (57) mit der zweiten Druckzone über den zweiten Kanal (38) in Verbindung steht und daß das Gehäuse (18) einen Teil (32) zur Befestigung mit der Leitung (10) aufweist, welcher Teil von dem ersten Kanal (38) und — versetzt zu diesem — von dem zweiten Kanal (40) durchquert ist.

2. Entlastungsventil nach Anspruch 1, dadurch gekennzeichnet, daß das Gehäuse durch innere und äußere Halbhülsen (18, 20) mit Flanschen (26, 28) gebildet wird, wobei die Membran (16) zwischen den Flanschen (26, 28) eingespannt ist, um die erste und zweite Kammer (22, 24) zu bilden.

3. Entlastungsventil nach Anspruch 2, dadurch gekennzeichnet, daß sich eine Feder (74) zwischen einem Flansch (68) an der Hülse (57) und der äußeren Halbhülse (20) erstreckt, um den Differentialdruck auf den vorbestimmten Betrag einzustellen.

## Revendications

1. Soupape de décharge à pression différentielle ayant une première et une seconde chambres (22, 24) situées de part et d'autre d'un diaphragme (16), pouvant être reliées respectivement à des zones de pression primaire et secondaire (12, 14) d'une conduite (10) à travers laquelle un fluide peut s'écouler, la soupape ayant de plus un corps (18, 20) présentant un premier et un second canal (40, 38) pouvant être respectivement reliés aux zones sous pression primaire et secondaire (12, 14) de la conduite (10), la première chambre (22) communiquant avec le premier canal (40) et la seconde chambre (24) communiquant avec le second canal (38), un organe de fermeture (57) monté coulissant dans le corps et fixé au diaphragme (16), l'organe de fermeture (57) traversant les chambres (22, 24) et étant rendu étanche dans le corps (18, 20), un siège de soupape (52) situé dans le corps (20) radialement à l'extérieur — par rapport à la conduite (10) — de la seconde chambre (24), caractérisée en ce que l'organe de fermeture est un manchon (57) ayant un orifice (70) faisant communiquer l'alésage du manchon (57) avec la seconde chambre (24), l'extrémité radialement extérieure du manchon (57) pouvant porter contre le siège de soupape (52) et l'extrémité radialement intérieure du manchon (57) communiquant avec la zone de pression secondaire à travers le second canal (38) et en ce que ledit corps (18) a une partie (32) pour fixation à la conduite (10), laquelle partie est traversée par ledit premier canal (38) et par ledit second canal (40) décalé par rapport à celui-ci.

2. Soupape de décharge selon la revendication 1, caractérisée en ce que le corps est formé par des demi-coquilles intérieure et extérieure (18, 20) ayant des brides (26, 28), le diaphragme (16) étant fixé entre les brides (26, 28) pour former les première et seconde chambres (22, 24).

3. Soupape de décharge selon la revendication 2, caractérisée en ce qu'un ressort (74) s'étend entre une bride (68) du manchon (57) et la demi-coquille extérieure (20) pour fixer la pression différentielle à la grandeur déterminée.

FIG.1.

FIG.2.